(19) Europäisches Patentamt / European Patent Office / Office européen des brevets

(11) **EP 2 146 237 A1**

(12) **EUROPEAN PATENT APPLICATION**

(43) Date of publication:
**20.01.2010 Bulletin 2010/03**

(51) Int Cl.:
*G02B 27/26* (2006.01)  *H04N 13/00* (2006.01)

(21) Application number: **08160665.9**

(22) Date of filing: **17.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Barco NV**
**8500 Kortrijk (BE)**

(72) Inventors:
• **Priem, Gino**
**9750, Zingem (BE)**

• **Maximus, Bart**
**9700, Oudenaarde (BE)**
• **Vermeirsch, Koenraad**
**8510, Bellegem (BE)**

(74) Representative: **Bird, William Edward et al**
**Bird Goën & Co.**
**Klein Dalenstraat 42A**
**3020 Winksele (BE)**

(54) **Stereoscopic optical system with a single projector by using extra light valves in the light path**

(57)    A stereoscopic projection system (2) comprises a first display panel (11) subdivided into individually addressable light emitting pixels (12, 13) and a second display panel (14) subdivided into individually addressable light transmitting or reflecting pixels (15, 16). The first and second display panel (11, 14) are arranged so that the light emitted from a light emitting pixel (12, 13) may pass through a pre-determined light transmitting or reflecting pixel (15, 16). During operation the left eye image and the right eye image of the stereoscopic image are displayed simultaneously on the light emitting pixels (12, 13) of the first display panel (11). Each light transmitting or reflecting pixel (15, 16) is adapted to change the polarization state of the light passing through as a response to a signal addressing the light transmitting or reflecting pixel (15, 16) and a first transmittance tunable spectral filter (17) is located in the light path between the first display panel (11) and the second display panel (14). The light leaving the second display panel (14) furthermore passes through a first polarizer (20).

FIG. 1

**Description**

**Field of the invention**

The present invention relates to a stereoscopic optical system and a method for displaying stereoscopic images as well as to a controller for controlling a stereoscopic projection system and software for controlling the operation of a stereoscopic projection system.

**Background of the invention**

Humans and many animals have binocular vision provided by two eyes which look in the same direction. Two parallel aligned but spaced eyes deliver two slightly different images of the same scene. This is due to the 4 to 6 cm separation between the eyes, which makes each eye have a slightly different viewpoint. The images from these two different viewpoints are sent to the brain, and this difference, which is termed parallax, is interpreted as depth. The nearer an object is to the eyes, the greater the difference between the two images. From the difference between the two images, the brain can display an impression of depth.

Stereoscopic image displays, such as stereoscopic projection for example, are based on the same principle: two slightly different images, one for the left eye and one for the right eye, are displayed by some means, e.g. projected onto a screen. A corresponding image modulating system enables the left eye to see only the left eye image, and the right eye to see only the right eye image.

Passive stereo displaying, when at least one, but often two projection devices are used to each project images intended to be seen by a different eye, may be based on the principle of different light polarizations or of differences in frequency (colour). For example, the viewer wears passive obscuration devices such as non-switchable obscuration devices. These may be a pair of glasses with two oppositely polarized lenses or filters, one for the left eye and one for the right eye. The light from each of two projected images is polarized differently and can pass only through its corresponding filter. If the images are provided by means of a single projector, the projector alternates the left eye information with the right eye information at double refresh rate. A screen in front of the projector's lenses alternates the polarization of the projected image in such a way that the image of each eye passes only through its corresponding polarizing filter of the pair of passive stereo glasses. If the images are provided by means of two projectors, one projector displays the left eye information and the other display the right eye information, both at a standard refresh rate. A polarizing filter mounted in the optical path of each projector ensures that the correct information passes through its corresponding filter in the pair of passive stereo glasses. If the projectors are LCD projectors, they may be internally polarized, thus eliminating the requirement for external filters. The two-projector approach has the added value over the one-projector approach of providing higher brightness.

Passive obscuration devices have the advantage over active obscuration devices that they are less expensive. 3D animation is often performed for a larger audience, to which obscuration devices are distributed. Obscuration devices often tend to be removed or stolen, which is very annoying in case they are rather expensive, but does not really matter in case they are a cheap pair of glasses with coloured plastic filters as the lenses.

WO 2006/038819 A1 relates to a stereoscopic display adapted to present a stereoscopic image composed of a plurality of pixels. This display includes a light intensity encoder adapted to emit light from a plurality of pixels with an assigned light intensity for each pixel, and a light polarization encoder adapted to receive light emitted from the light intensity encoder and to emit this light with an assigned polarization state for each pixel. The display provided is adapted to emit light polarized with a non-spatial polarization. The invention disclosed also encompasses a stereoscopic image decoder with each filter to be positioned between a stereoscopic display and an eye of an observer.

WO 98/25414 A1 discloses an apparatus and a method for generating a stereo image that is perceived as a three-dimensional image when viewed through polarizing spectacles having orthogonally polarized lenses. The apparatus includes an illuminator that generates light of variable intensity, a modulator that generates an illumination control signal for controlling the intensity of light emitted by the illuminator, a polarizer for polarizing the light generated by the illuminator, and a distributor for changing the plane of polarization of the polarized light.

EP 1 830 585 A2 discloses a stereoscopic projection system comprising a projection device with at least one filter which filters a parameter of the light in a colour selective manner. The at least one filter which filters a parameter of the light in a colour selective manner has a spectral characteristic for transmitting light in a first wavelength band or set of wavelength bands and for reflecting light in a second wavelength band or set of wavelength bands. The projection device comprises a means, such as e.g. a rotating wheel or a sliding filter, for fast synchronized switching between light in different wavelength bands or sets of wavelength bands.

Despite the efforts made there is a constant need in the art for improved stereoscopic projection systems.

## Summary of the invention

It is an object of the invention to provide improvements on stereoscopic projection displays and method of operating projection systems. It is a further object of the present invention to provide an improved method for displaying stereoscopic images.

Accordingly, the present invention provides a stereoscopic optical system comprising: a first display panel subdivided into individually addressable light emitting or transmitting or reflecting, pixels; and

a second display panel subdivided into individually addressable light transmitting or reflecting, pixels;

the first and second display panel being arranged so that the light emitted from a light emitting or transmitting or reflecting, pixel of the first display may pass through a pre-determined light transmitting or reflecting pixel of the second display;

wherein during operation the left eye image and the right eye image of the stereoscopic image are displayed simultaneously on the light emitting or transmitting or reflecting, pixels of the first display panel;

wherein each light transmitting or reflecting pixel of the second display is adapted to change the polarization state of the light passing through as a response to a signal addressing the light transmitting or reflecting pixel;

wherein a first spectral filter is located in the light path between the first display panel and the second display panel; and

wherein the light leaving the second display panel furthermore passes through a polarizer.

The set of spectral filter, second display panel and polarizer may be considered as a transmittance tunable spectral filter.

It is noted that a stereoscopic optical system according to the invention encompasses both direct view systems or displays and projection systems or displays. Likewise, a method for providing stereoscopic images will encompass both the projection and the direct display of stereoscopic images.

The main advantage according to the invention is that the perceived stereo quality basically does not depend on polarization. This implies that once the light has passed the last polarizer no particular precautions have to be taken to preserve polarization. In particular it is possible to use heavy scattering screens or diffusers for display purposes. The outgoing light displays a modulated spectrum in which information for the left eye is contained in one set of wavelength bands and for the right eye in a complementary set of wavelength bands. Therefore it is possible to use wavelength selective eyewear that does not rely on polarization.

In another aspect the present invention provides a method for providing stereoscopic images comprising the steps of:

  a. Providing a left eye stereo video signal S_l assigned to an individual light emitting or transmitting or reflecting pixel, the signal comprising information on the x-coordinate of the pixel, the y-coordinate of the pixel, the wavelength of the light emitted or transmitted or reflected, by the pixel and the intensity of the light emitted, or transmitted or reflected, by the pixel;

  b. Providing a right eye stereo video signal S_r assigned to an individual light emitting or transmitting or reflecting, pixel, the signal comprising information on the x-coordinate of the pixel, the y-coordinate of the pixel, the wavelength of the light emitted or transmitted or reflected by the pixel and the intensity of the light emitted or transmitted or reflected by the pixel;

  c. Processing the signals S_l and S_r to yield an intensity information S comprising information on the intensity and the wavelength of light emitted, or transmitted or reflected from a pixel with x and y coordinates;

  d. Processing the signals S_l and S_r to yield a polarization information P comprising information on the polarization and the wavelength of light emitted or transmitted or reflected from a pixel with x and y coordinates;

  e. Providing the image according to intensity information S on a first projection or display panel;

  f. Filtering a parameter of the light in a colour-selective manner;

  g. Changing the degree of polarization of the light according to polarization information P on a second projection or display panel; and

  h. Modulating the amplitude of the light leaving the second display panel in a polarization-selective manner.

The present invention is also related to a controller for controlling a stereoscopic optical system to carry out a method according to the present invention.

The controller comprises means for controlling a left eye stereo video signal S_l assigned to an individual light emitting, or transmitting or reflecting, pixel, the signal comprising information on the x-coordinate of the pixel, the y-coordinate of the pixel, the wavelength of the light emitted, or transmitted or reflected by the pixel and the intensity of the light emitted, or transmitted or reflected, by the pixel.

The controller also comprises means for controlling a right eye stereo video signal S_r assigned to an individual light emitting, or transmitting or reflecting, pixel, the signal comprising information on the x-coordinate of the pixel, the y-coordinate of the pixel, the wavelength of the light emitted or transmitted or reflected by the pixel and the intensity of the light emitted or transmitted or reflected by the pixel.

The controller also comprises means for processing the signals S_l and S_r to yield an intensity information S comprising information on the intensity and the wavelength of light emitted, or transmitted or reflected, from a pixel with x and y coordinates.

The controller also comprises means for processing the signals S_l and S_r to yield a polarization information P comprising information on the polarization and the wavelength of light emitted or transmitted or reflected from a pixel with x and y coordinates.

The controller also comprises means for controlling the projection or display of the image to intensity information S on a first projection or display panel and for filtering a parameter of the light in a colour-selective manner, for varying the degree of polarization of the light according to polarization information P on a second projection or display panel and for modulating the amplitude of the light leaving the second projection or display panel in a polarization-selective manner.

The present invention also includes a stereoscopic optical system comprising a first cholesteric display and a second cholesteric display, wherein the first cholesteric display determines a first eye image and the second cholesteric display defines a second eye image and wherein the first cholesteric display and the second cholesteric display reflect circular polarized light of opposing handedness.

The first and the second cholesteric display may each comprise red, green and blue pixels.

The pres invention also includes a stereoscopic optical system comprising a display panel and in the optical path of the light of the display panel a first and a second cholesteric filter, the cholesteric filters comprising individually addressable pixels, wherein the light source is adapted to simultaneously display a left eye image and a right eye image, wherein the light from each pixel of the light source passes through a pre-determined pixel of the first and the second cholesteric filter and wherein the first and the second cholesteric filter reflect circular polarized light of opposing handedness.

The present invention is also directed towards a computer-readable medium, comprising instructions enabling a computer to carry out the method according to the present invention. Such media may be mass storage media, random access memory or media accessible via a computer network.

The present invention is also directed towards a software or computer program product comprising instructions enabling a computing device to carry out the method according to the present invention.

## Brief description of the drawings

FIG. 1 shows a system according to an embodiment of the present invention
FIG. 2 shows the operation of a system according to an embodiment of the present invention
FIG. 3 shows the operation of another system according to an embodiment of the present invention
FIG. 4 shows the operation of another system according to an embodiment of the present invention
FIG. 5 schematically illustrates a method according to an embodiment of the present invention
FIG. 6 shows example of a stereoscopic image an embodiment of the present invention
FIG. 7 shows Poincaré spheres
FIG. 8 shows the operation of a system according to a further embodiment of the present invention.

## Detailed description of the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. Similarly, it is to be noticed that the term "connected", also used in the claims, should not be interpreted as being restricted to direct connections only, although "connected" includes a direct connection which may be advantageous. Reference throughout this specification to "one embodiment" or "an embodiment" means that a particular feature, structure or characteristic described in connection with the embodiment is included in at least one embodiment of the present invention. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. Furthermore, while some embodiments described herein include some but not other features included in other embodiments, combinations of features of different embodiments are meant to be within the scope of the invention, and form different embodiments, as would be understood by those in the art. In the description provided herein, numerous specific details are set forth. However, it is understood that embodiments of the invention may be practised without these specific details. In other instances, well-known methods, structures and techniques have not been shown in detail in order not to obscure an understanding of this description.

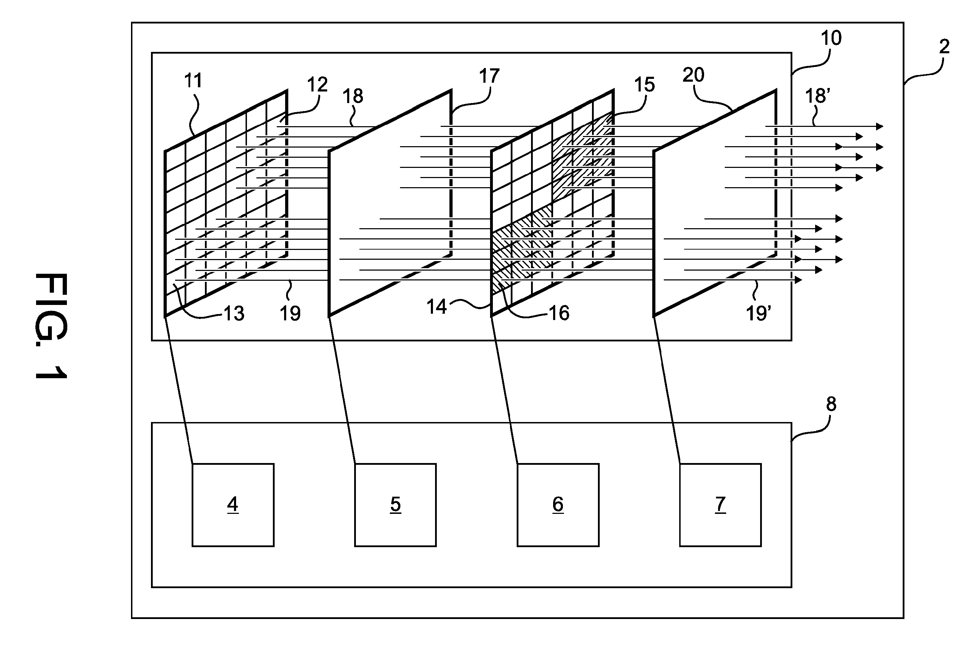

A system according to the present invention is illustrated in FIG. 1. The stereoscopic optical system 2 comprises a display or projector unit 10 of a single projector and a controller unit 8 for the system. The unit 10 comprises a first display panel 11 and a second display panel 14. Both panels are subdivided into individually addressable picture elements or pixels. This means that each pixel may change its state independently of the other pixels, i.e. an arbitrary image can be displayed using individually addressable pixels. The pixels of the first display can emit, transmit or reflect light when stimulated. The pixels of the second display can transmit or reflect light when stimulated.

The controller unit 8 comprises a video controller 4 to control the image displayed on the first panel 11 and a polarisation controller 6 to control the second panel 14. The first display panel 11 comprises light emitting pixels, as exemplified by reference numerals 12 and 13. The light emitting pixels 12, 13 can emit light by modifying light from a light source, e.g. by alteration of their transmissivity, may be light source themselves or may be light reflecting elements. Examples for suitable light emitting pixels include, but are not limited to, light emitting diodes (LED), organic light emitting diodes (OLED), liquid crystal displays (LCD), digital micromirror devices (DMD) or liquid crystal on silicon (LCoS) devices. The light emitting pixels may comprise subpixels such as red, green and blue subpixels in order to generate light of a desired colour.

In the light path between the first display panel 11 and the second display panel 14 a first spectral filter, e.g. a first color selective retarder 17 is located. In the context of the present invention, a spectral filter filters a parameter of the light passing through in a colour-selective manner, either in transmittance or in reflectance. Furthermore, in the path of the light leaving the second display panel 14 a polarizer 20 is located. This polarizer serves to selectively impede the transmission of light with a certain polarization state.

With "to filter a parameter of the light in a colour selective manner" is meant any suitable optical filtering procedure which changes a parameter, such as amplitude, frequency or polarization, of the light in a colour selective manner.

To "filter the amplitude of the light in a colour selective manner" is typically known as colour selective filtering. Such a filter transmits some wavelengths or wavelength bands of light impinging onto it, and filters out, by reflection and/or absorption, other wavelengths or wavelength bands of light. This type of filter includes optical low pass filters, optical high pass filters or optical band pass filters.

To "filter the polarization of the light in a colour selective manner" is typically performed by a colour selective retarder. Such a filter changes the polarization state of the light within a certain wavelength band (or within certain wavelength bands), while it does not change the polarization state of the light outside this wavelength band (or outside these wavelength bands).

To "filter the frequency of the light in a colour selective manner" is typically performed by a fluorescence filter. Such a filter comprises an active optical element in which light from a first wavelength or wavelength band is converted into light from a second wavelength or wavelength band.

Thus "filters which filter a parameter of the light in a colour selective manner" include, but are not limited to, colour selective filters, colour selective retarders and cholesteric filters.

The second display panel 14 comprises light transmitting or reflecting pixels, as exemplified by reference numerals 15 and 16. Each light transmitting or reflecting pixel is adapted to change the polarization state of the light passing through as a response to a signal. The light transmitting or reflecting pixel 15 is addressed to set the polarization of the light according to a certain polarization. This is indicated by the hatching of pixel 15. Light transmitting or reflecting pixel 16 is addressed to set the polarization of the light to a different polarization state than the polarization state of pixel 15. This is also indicated by the hatching of pixel 16. With this configuration and in combination with appropriate eyewear light emerging from the light emitting pixels can be divided between the left and the right eye of the viewer.

In FIG. 1 the polarized light beam 18 emitted from pixel 12 and light beam 19 emitted by pixel 13 pass through the first spectral filter 17 into transmitting or reflecting pixels 15 and 16, respectively and after passing through the polarizer 20 leave as light beams 18' and 19'. The combination of 17,14 and 20 can be considered to be a tunable spectral filter.

The second display panel 14 is arranged so that the light emitted from a light emitting pixel may pass through a pre-determined light. transmitting or reflecting pixel. In simple cases, as shown in FIG. 1, this may be achieved by aligning the panels 11 and 14 in the optical paths. However, it is also possible to modify the optical paths by lenses, mirrors and the like. The first display panel may be projected on the second display panel or one may use for instance a collimated light source to be able to put the groups of display panels close to each other.

According to the present invention, during operation of the projection system the left eye image and the right eye image of the stereoscopic image are displayed simultaneously or substantially simultaneously on the light emitting pixels of the first display 11. The information on how much light should reach each eye is transferred via the light transmitting or reflecting pixels of the second display panel 14. In combination with appropriate eyewear worn by the viewer a stereoscopic image can be achieved.

The number of tunable spectral filters, e.g. transmittance tunable spectral filters, depends on the configuration or the type of light valve that is considered. In case of a direct view screen this may be a single tunable spectral filter, in which all pixels of the second display panel (for instance, an ECB cell) may be aligned with the red, green and blue subpixels of the intensity panel. Also in case of a single chip digital micromirror device (DMD) projector technology one single tunable spectral filter may be sufficient.

In case of a 3 chip DMD projector technology or a 3 chip liquid crystal on silicon (LCoS) projector technology it may be necessary to use 3 tunable spectral filters. In the latter case the spectral filters do not have to be broadband and are thus cheaper to fabricate. If the passive eyewear comprises filters with spectral characteristics substantially similar to the characteristics of the tunable spectral filters then this configuration can be used to control the amount of pixel light that will enter the left and right eye, i.e. it is possible to display stereo images.

It is not excluded that the first display panel is used for other purposes than to define the intensity and that the second display panel is used for other purposes than to define the polarization.

In summary, the system according to the present invention eliminates the need for separate display panels for the left and the right eye images. Projectors can be built smaller and the energy consumption can be reduced. Furthermore, cheaper passive eyewear such as colour filters may be worn by the observer. The need for polarization based eyewear is optional or eliminated.

In an embodiment of a system according to the present invention the light transmitting or reflecting pixels 15, 16 of the second display panel 14 comprise polarization changing selected from the group comprising electrically controlled birefringence (ECB) cells, optically controlled bend (OCB) cells, vertically aligned nematic (VAN) cells, twisted nematic (TN) cells, pi-cells, ferroelectric cells, antiferroelectric cells and/or non-liquid crystal cells. However, the present invention is not limited thereto.

While it is often preferred to use ECB cells, the choice of using other display cells than ECB cells may result from the necessary spectral behaviour. In some applications it may be necessary to use very broadband cells as for instance TN cells, in other applications it may be useful to use small band cells, as for instance an ECB, OCB or VAN cells. The liquid crystal molecules may be oriented differently, the driven and undriven state may also differ.

In a further embodiment of a system according to the present invention the first spectral filter 17 includes a colour selective retarder. By this separate wavelength bands of the light can be assigned a different polarization.

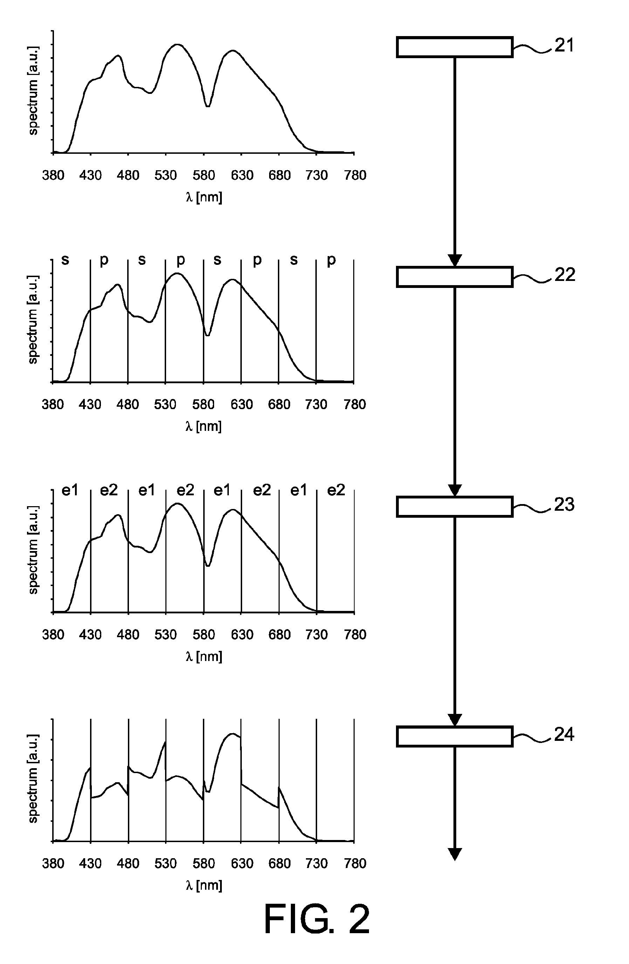

FIG. 2 shows, reading from top to bottom, the effect of combining a colour selective retarder, an ECB cell and a polarizer. Light is emitted from display panel 21 with the corresponding optical spectrum shown to the left. The light that is already polarized before reaching 22 passes through colour selective retarder 22 which changes the light polarization of certain spectral parts. In the spectrum to the left of colour selective retarder 22 the two different polarizations are indicated by s and p, but of course s and p can represent any (preferably substantially orthogonal) polarizations. The light then passes through ECB cell 23. The former polarizations s and p of the specified wavelength bands are changed into elliptical polarization states e1 and e2. These elliptical polarization states are substantially orthogonal to each other. The spectrum to the left of ECB cell 23 shows how specified wavelength bands have been given the polarization states e1 and e2. Finally, the light passes through polarizer 24. The effect of polarizer 24 is to impede the transmission of light with the polarization state e2 to a specific degree and polarization state e1 to another specific degree. This is shown in the spectrum to the left of polarizer 24. Thus, by using such combinations it is possible to control the amount of light in spectral bands.

In a further embodiment of a system according to the present invention the first spectral filter 17, comprises cholesteric filters.

In a further embodiment according to the present invention the system further comprises a second polarizer. The second polarizer is located in the light path after the first spectral filter. This system may also further comprise a second spectral filter, which is located in the light path after the first spectral filter. Then the second polarizer is located in the light path after the second spectral filter. Preferably, the second spectral filter includes a colour selective retarder.

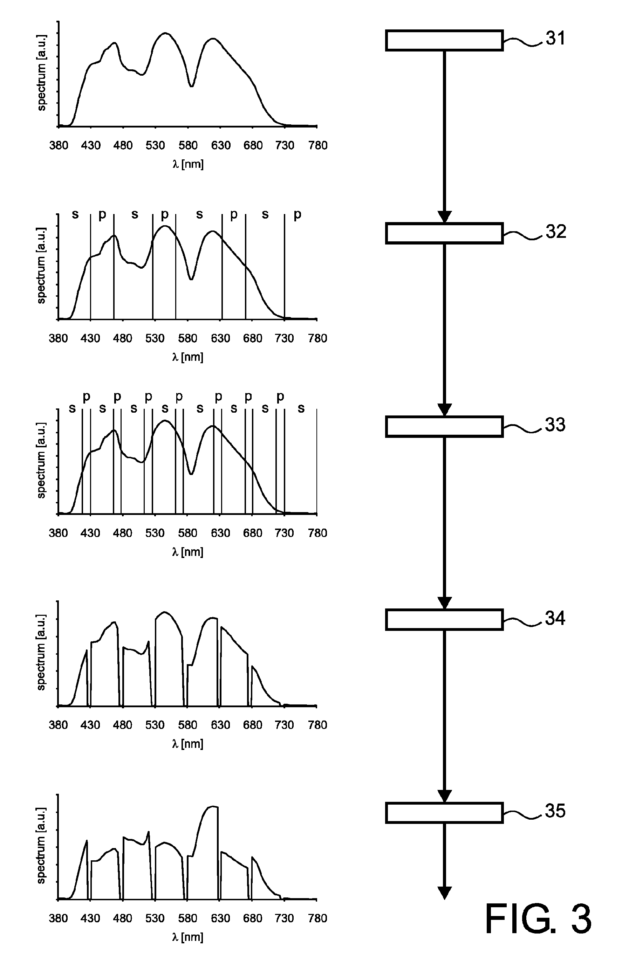

Thus, it is possible to have some space between two adjacent spectral bands by using a number of extra colour selective retarders and polarizers. This is illustrated in FIG. 3.

FIG. 3 shows, reading from top to bottom, the effect of combining several colour selective retarders, an ECB cell and polarizers. Light is emitted from display panel 31 with the corresponding optical spectrum shown to the left. The light passes through first colour selective retarder 32 which changes the light polarization of certain spectral parts. In the spectrum to the left of colour selective retarder 32 the two different polarizations are indicated by s and p, but of course s and p can represent any (preferably substantially orthogonal) polarizations. The light then passes through second colour selective retarder 33. The former frequency bands with polarization p now receive the polarization s. Furthermore, new frequency bands with polarization p are created, as shown in the spectrum to the left. These bands with the polarization p are removed from the spectrum in second polarizer 34. The gaps can be seen in the spectrum to the left of second polarizer 34. Finally, in analogy to the steps in FIG. 2, the light passes through element group 35 comprising a third colour selective retarder, an ECB cell and a first polarizer. The resulting spectrum shows how it is possible to control the amount of light in spectral bands while having a band gap between the bands.

Having a band gap or space between adjacent spectral bands may be useful, for instance, to reduce the cross talk between the eyes. This means reducing the amount of light leaking to the wrong eye. It is envisaged that it is also possible to use another amount of colour selective retarders than illustrated in FIG. 3. The system according to the present invention may further comprise optical notch filters in the light path. One may for instance use the configuration of FIG. 2 and use a number of optical notch filters (like interference filters) to create space between two adjacent spectral bands.

In a further embodiment further according to the present invention the system further comprises a third display panel subdivided into individually addressable light transmitting or reflecting pixels arranged so that the light from the first polarizer may pass through a pre-determined light transmitting or reflecting pixel. In the third display panel each light transmitting or reflecting pixel is adapted to change the polarization state of the light passing through as a response to a signal addressing the light transmitting or reflecting pixel. This embodiment allows to provide a spectrum with a combination of wavelength band selective amplitude modulation and polarization. It is preferred that the light emitting, e.g. transmitting or reflecting pixels of the third display panel comprise polarization changing means selected from the group comprising electrically controlled birefringence cells, optically controlled bend cells, vertically aligned nematic cells, twisted nematic cells, pi-cells, ferroelectric cells, antiferroelectric cells and/or non-liquid crystal cells. Thus, the light transmitting or reflecting pixels of the third display panel may comprise ECB cells to control the polarization of the light.

It is then possible to display two different stereo images for two observers. It is also possible to use two different effects (spectral filtering and polarization) to reduce the cross talk. The passive eyewear for this configuration uses a combination of spectral filtering and polarization. For instance the eyewear can have glued on polarizers.

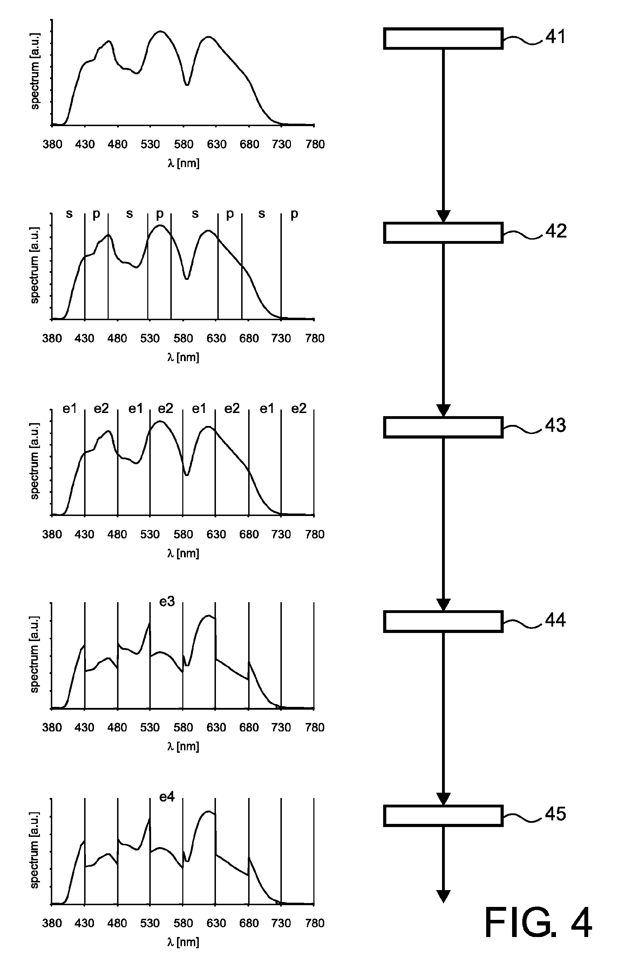

FIG. 4 shows such a system. Light is emitted from display panel 41 with the corresponding optical spectrum shown to the left. The light passes through colour selective retarder 42 which changes the light polarization of certain spectral parts. In the spectrum to the left of colour selective retarder 42 the two different polarizations are indicated by s and p, but of course s and p can represent any (preferably substantially orthogonal) polarizations. The light then passes through ECB cell 43. The former polarizations s and p of the specified wavelength bands are changed into elliptical polarization states e1 and e2. These elliptical polarization states are substantially orthogonal to each other. The spectrum to the left of ECB cell 43 shows how specified wavelength bands have been given the polarization states e1 and e2. Next, the light passes through polarizer 44. The effect of polarizer 44 is to selectively impede the transmission of light with the polarization state e2. The resulting spectrum to the left shows the polarization state after passing the polarizer. Finally, the light passes through ECB cell 45 which changes the polarization to state e4. Polarization state e4 is an elliptical polarization state which determines the transmission through the left and right eye glass of an appropriate viewing device worn by a person. With this system it is possible to display two different stereo images for two observers.

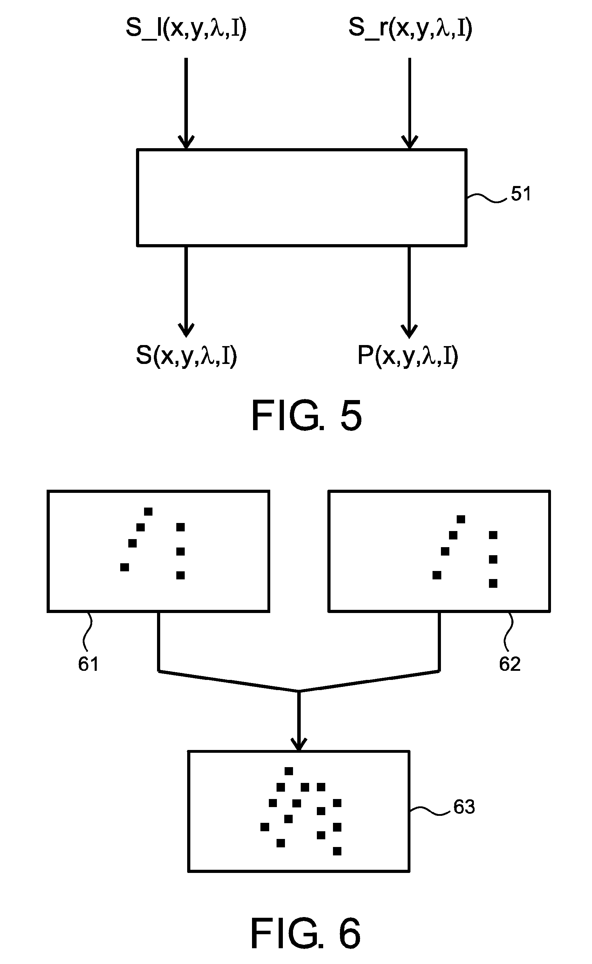

The method for displaying stereoscopic images and the associated controller for for controlling a stereoscopic optical system to carry out a method according to the present invention is best understood with reference to FIG. 5. An intensity I_outgoing defines the outgoing light of an image pixel. The signal $S(x,y,\lambda,I)$ that will determine this outgoing intensity is a function of the two stereo signals for left eye $S\_l(x,y,\lambda,I)$ and the right eye $S\_r(x,y,\lambda,I)$. A second display panel is used to define the polarization P_outgoing of the outgoing light of an image pixel. The processing of the signals $S\_l(x,y,\lambda,I)$ and $S\_r(x,y,\lambda,I)$ is indicated by step 51.

The signal $P(x,y,\lambda,I)$ that will determine this outgoing polarization is a function of the two stereo signals for the left eye $S\_l(x,y,\lambda,I)$ and the right eye $S\_r(x,y,\lambda,I)$. This is also illustrated in FIG. 5. The light of an image pixel is thus characterized by two quantities: its intensity I_outgoing and its polarization P_outgoing. If one were to consider a polarization based passive eyewear to view the stereoscopic image, the polarization transmitted by the left eye polarizer may be orthogonal to the polarization transmitted by the right eye polarizer. In such an embodiment the amount of light entering the left eye I_left_eye depends both on the outgoing intensity of a pixel as well as on the polarization of the light coming from this pixel. The same holds for the amount of light entering the right eye I_right_eye. So one can state that:

$$I\_left\_eye = I\_outgoing \times T\_left(P\_outgoing)$$

$$I\_right\_eye = I\_outgoing \times T\_right(P\_outgoing)$$

Since the polarization transmission directions in the eyewear are orthogonal with respect to each other, the following equation holds:

$$T\_left(P\_outgoing) + T\_right(P\_outgoing) = 1$$

This means that all the outgoing light is distributed among the two eyes.

Further to the method a parameter of the light is then filtered in a colour-selective manner before changing the degree of polarization according to polarization information P. Preferably, this filtering is done in a wavelength band selective manner so that different wavelength bands are assigned a different polarization. Then the amplitude of the light is modulated in a polarization-selective manner. Preferably again, this is undertaken in a wavelength band selective manner so that different wavelength bands have different amplitudes. By dynamically changing the polarization, this single projector approach has the advantage that all light can be directed to a single eye which is fundamentally different from all other stereo approaches. This approach is also different from time sequential approaches where the maximum light intensity on each eye is inherently limited half of the projector output. This holds even without considering the light loss due to the dark time between two consecutive images. In stereographic applications, this property can be used to display nearby images at full brightness.

By way of an illustrative example, FIG. 6 shows a pixelated image of the run lights of an airport at night as seen by. For reasons of clarity, the lights are depicted as black pixels. In stereographic applications, the nearby images for each eye will be different and the run lights in the left eye image 61 and the right eye image 62 correspond to physically distinct pixels on the screen image 63. As a result, almost all the light incident on that pixel can be sent to a single eye (notwithstanding the grey level of the night image projected by the same pixel for the second eye).

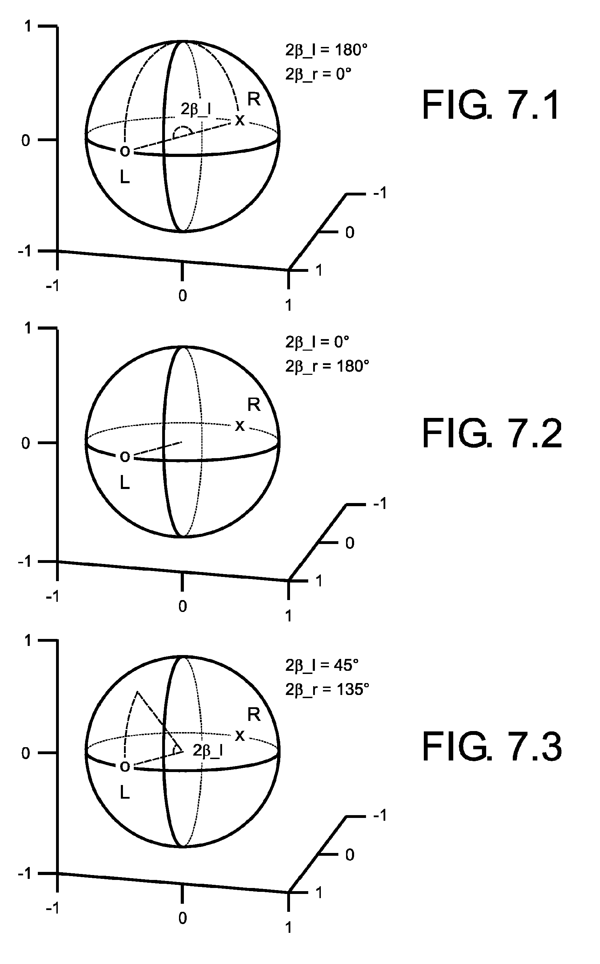

In an embodiment of the method according to the present invention the changing of the degree of polarization of the light in step g. is undertaken using means selected from the group comprising electrically controlled birefringence cells, optically controlled bend cells, vertically aligned nematic cells, twisted nematic cells, pi-cells, ferroelectric cells, antiferroelectric cells and/or non-liquid crystal cells. Preferred is the use of an electrically controlled birefringence cell (ECB cell) to control the polarization state of the outgoing light. A good way to illustrate the principle of operation of this is by means of the Poincaré sphere representation as shown in FIG. 7.

In the not driven state all liquid crystal molecules of the ECB cell are in the same plane and approximately parallel to the cell surface. The ECB cell then may act as a half wave retarder and the polarization is rotated over 90°. Under certain conditions of orientation of the ECB cell with respect to the outgoing polarization the polarization of the light will evolve on a meridian on the Poincaré sphere during propagation through the ECB cell. The first representation point is determined by the incoming polarization in the ECB cell (point L in FIG. 7.1) and ending after a rotation angle of $2 \times 90°$ (ECB cell acts as a half wave retarder) in the outgoing polarization (point R in FIG. 7.1). As a result, in the not driven state all outgoing light passes through the glass of the eyewear that contains a polarizer transmission direction R and is blocked by the other glass of the eyewear (i.e. glass that contains a polarizer with transmission direction L).

In the driven state all liquid crystal molecules are approximately perpendicular to the cell surface. The ECB cell then does not change the polarization, it has zero retardance, and the outgoing polarization is represented by point L (FIG. 7.2). All outgoing light now passes through glass with polarizer transmission direction L of the eyewear and is blocked by the other one (glass that contains a polarizer with transmission direction R).

For an intermediate state the polarization of the light entering the glasses is somewhere between the driven polarization state and the not driven polarization state (FIG. 7.3) and can be characterized by its orientation angle θ ($0 \leq \theta \leq \pi$) and its ellipticity ε ($-\pi/4 \leq \varepsilon \leq \pi/4$).

The amount of light transmission T_left through a polarizer with transmission direction represented in L is given by

$$T\_left = 1/2(1+\cos(2\beta\_l))$$

$2\beta\_1$ being the angle between outgoing polarization state and polarizer transmission direction L (FIG. 7)

The amount of light transmission T_right through a polarizer characterized by R (the polarizer in front of the right eye) is given by

$$T\_right = 1/2(1+\cos(2\beta\_r))$$

$2\beta\_r$ being the angle between outgoing polarization state and polarizer transmission direction R (FIG. 7)

Since $\beta\_1 + \beta\_r = \pi /2$ no light is lost.

In another embodiment of the method according to the present invention the filtering of a parameter of the light in a colour-selective manner according to step f. is undertaken using a colour-selective retarder. Thus, the colour selective retarder changes the polarization in a wavelength selective manner. Preferably, different wavelength bands are assigned a different polarization.

With respect to the controller for controlling a stereoscopic optical system to carry out a method according to the present invention, reference is made to FIG. 1 in conjunction with FIG. 5. The controller unit 8 can be adapted to control the system 2 and in particular the display unit 10 so that a left eye stereo video signal S_l assigned to an individual light emitting pixel is provided. This signal comprises information on the x-coordinate of the pixel, the y-coordinate of the pixel, the wavelength of the light emitted by the pixel and the intensity of the light emitted by the pixel.

Furthermore, the controller unit 8 can be adapted to control the system 2 and in particular the display unit 10 so that a right eye stereo video signal S_r assigned to an individual light emitting pixel is provided. This signal comprises information on the x-coordinate of the pixel, the y-coordinate of the pixel, the wavelength of the light emitted by the pixel and the intensity of the light emitted by the pixel.

The controller unit 8 can be adapted to control the system 2 and in particular the diaplay unit 10 so that the signals S_l and S_r are processed to yield an intensity information S comprising information on the intensity and the wavelength of light emitted from a pixel with x and y coordinates and so that the signals S_l and S_r are processed to yield a polarization information P comprising information on the polarization and the wavelength of light emitted from a pixel with x and y coordinates.

The controller unit 8 can be adapted to control the system 2 and in particular the display unit 10 so that the image can be projected or displayed according to intensity information S on a first projection or display panel 11, so that a parameter of the light is filtered in a colour-selective manner (for example, via spectral filter 17), so that the degree of polarization of the light can be varied according to polarization information P on a second projection or display panel 14 and so that the amplitude of the light leaving the second projection or display panel 14 can be modulated in a polarization-selective manner (for example, via polarizer 20).

The controller unit 8 may include one or more processing engines, e.g. a microprocessor such as an Intel Pentium microprocessor or an embedded processor, e.g. an ARM processor core as described in "ARM, System-on-chip architecture" by Steve Furber, Addison-Wiley, 2nd edition, 2000, e.g. as a VLSI chip around an embedded microprocessor such as an ARM7TDMI core designed by ARM Ltd., UK which may be synthesized onto a single chip. A processing engine may be a programmable digital logic device such as a Programmable Array Logic (PAL), a Programmable Logic Array, a Programmable Gate Array, especially a Field Programmable Gate Array (FPGA) or any other similar processing engine. The video controller 4, and the polarisation controller 6 may be implemented as separate units or may be all integrated into a single unit. The controller unit 8 may be an integral part of the display or projection system 2 or may be provided as a separate unit.

The present invention also includes software for performing any of the methods of the present invention. In particular the present invention provides software having code segments for implementing, when executed on a computing system control of a stereoscopic projection or display system to carry out a method according to the present invention.

The software can include code segments for controlling the system so that a left eye stereo video signal S_l assigned to an individual light emitting pixel is provided, the signal comprising information on the x-coordinate of the pixel, the y-coordinate of the pixel, the wavelength of the light emitted by the pixel and the intensity of the light emitted by the pixel.

Furthermore, the software can include code segments for controlling the system so that a right eye stereo video signal S_r assigned to an individual light emitting pixel is provided, the signal comprising information on the x-coordinate of the pixel, the y-coordinate of the pixel, the wavelength of the light emitted by the pixel and the intensity of the light emitted by the pixel.

Additional code segments included in the software may control the system so that the signals S_l and S_r are processed to yield an intensity information S comprising information on the intensity and the wavelength of light emitted from a pixel with x and y coordinates and so that the signals S_l and S_r are processed to yield a polarization information P comprising information on the polarization and the wavelength of light emitted from a pixel with x and y coordinates.

Other code segments included in the software may control the system so that the image can be projected or displayed according to intensity information S on a first projection or display panel, so that a parameter of the light is filtered in a colour-selective manner, so that the degree of polarization of the light can be varied according to polarization information P on a second projection or display panel and so that the amplitude of the light leaving the second projection or display panel can be modulated in a polarization-selective manner.

The present invention is also directed towards a computer-readable medium, comprising the software or computer program product described above. The computer-readable medium stores instructions enabling a computer to carry out the method according to the present invention. Such media may be mass storage media, e.g. optical disk, magnetic storage such as a hardrive or diskettes or a tape drive, solid state memory such as a USB memory stick, random access memory or media accessible via a computer network, etc.

A further aspect of the present invention relates to a stereoscopic optical system comprising a first cholesteric display and a second cholesteric display, wherein the first cholesteric display determines a first eye image and the second cholesteric display defines a second eye image and wherein the first cholesteric display and the second cholesteric display reflect circular polarized light of opposing handedness.

It is possible in this stereoscopic optical system for the first and the second cholesteric display to each comprise red, green and blue pixels.

For example, a first cholesteric display comprising R, G and B subpixels for each pixel may determine the left eye image by defining the amount of left hand circular polarized in a certain image pixel. For a pixel in the non switched state all left handed circular polarized light is reflected, in the switched state all left handed circular polarized light is transmitted.

A second cholesteric display comprising R, G and B subpixels for each pixel may determine the right eye image by defining the amount of right hand circular polarized in a certain image pixel. For a pixel in the non switched state all right handed circular polarized light is reflected, in the switched state all right handed circular polarized light is transmitted.

By this the amount of outgoing left handed circular polarized light and the amount of outgoing right handed circular polarized light can be controlled. If the switching speed of the cholesteric displays is large enough, it is possible to replace the group (R, G, B) of displays by one display and use one of the existing colour sequential approaches. For this fourth embodiment one can use passive eyewear with circular polarizers. A possible advantage of this configuration is that the pixels of the two cholesteric displays do not have to be aligned very meticulously.

It is also possible to use transmissive cholesteric filters. Thus, a stereoscopic optical system is provided comprising a display panel and in the optical path of the light of the display panel a first and a second cholesteric filter, the cholesteric filters comprising individually addressable pixels, wherein the light source is adapted to simultaneously display a left eye image and a right eye image, wherein the light from each pixel of the light source passes through a pre-determined pixel of the first and the second cholesteric filter and wherein the first and the second cholesteric filter reflect circular polarized light of opposing handedness.

The number of cholesteric filters that is necessary depends on the display configuration that is considered. For a single chip DMD projector technology or for a direct view monitor for instance, one left handed cholesteric filter and one right handed cholesteric filter may be sufficient. For a 3 chip DMD projector technology or a 3 chip LCoS projector technology it may be necessary to use 3 left handed cholesteric filters and three right-handed cholesteric filters. However in such case the cholesteric filters may be small band, since it may be sufficient that they work in the red, green and blue wavelength region.

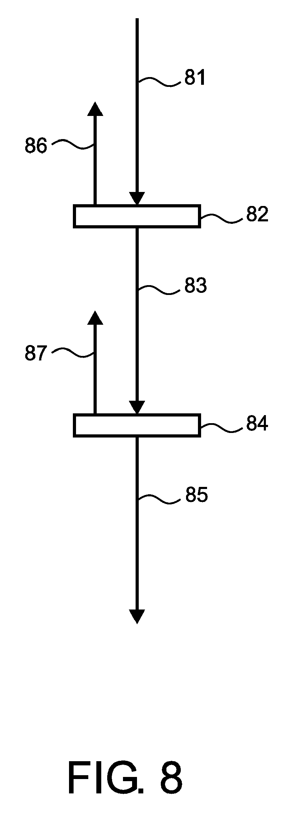

In FIG. 8 the light beam 81 coming from a light emitting pixel reaches switchable cholesteric filter 82 of a first handedness. By way of example, this filter defines the amount of left hand circular polarized light from a certain image pixel for the left eye. Cholesteric filter 82 reflects a certain amount of light 86 with the opposing circular polarization. The passing light 83 reaches cholesteric filter 84 of a second handedness. By way of example, this filter defines the amount of right hand circular polarized light from a certain image pixel for the right eye. Cholesteric filter 84 reflects a certain amount of light 87 with the opposing circular polarization. The passing light 85 with a modulated circular polarization then reaches the viewer.

The particular combinations of elements and features in the above detailed embodiments are exemplary only; the interchanging and substitution of these teachings with other teachings in this and the patents/applications incorporated by reference are also expressly contemplated. As those skilled in the art will recognize, variations, modifications, and other implementations of what is described herein can occur to those of ordinary skill in the art without departing from the spirit and the scope of the invention as claimed. Accordingly, the foregoing description is by way of example only and is not intended as limiting. The invention's scope is defined in the following claims and the equivalents thereto. Furthermore, reference signs in the claims are not to be construed as limiting.

**Claims**

1. Stereoscopic optical system (2) comprising:

   a first display panel (11) subdivided into individually addressable light emitting pixels (12, 13); and
   a second display panel (14) subdivided into individually addressable light transmitting or reflecting pixels (15, 16);
   the first and second display panel (11, 14) being arranged so that the light emitted from a light emitting pixel (12, 13) of the first display may pass through a pre-determined light transmitting or reflecting pixel (15, 16) of the second display;
   wherein during operation the left eye image and the right eye image of the stereoscopic image are displayed simultaneously on the light emitting pixels (12, 13) of the first display panel (11);
   wherein each light transmitting or reflecting pixel (15, 16) of the second display is adapted to change the polarization state of the light passing through as a response to a signal addressing the light transmitting or reflecting pixel (15, 16);
   wherein a first spectral filter (17) is located in the light path between the first display panel (11) and the second display panel (14); and
   wherein the light leaving the second display panel (14) furthermore passes through a first polarizer (20).

2. System according to claim 1, further comprising a second polarizer (34), wherein the second polarizer (34) is located in the light path after the first spectral filter (32).

3. System according to claim 2, further comprising a second spectral filter (33), wherein the second spectral filter (33) is located in the light path after the first spectral filter (32) and wherein the second polarizer (34) is located in the light path after the second spectral filter (32).

4. System according to any previous claim, wherein the first spectral filter (17) and/or second spectral filter comprises a colour selective retarder.

5. System according to one of claims 1 to 3, wherein the first spectral filter (17) comprises a cholesteric filter.

6. System according to claim 5, wherein the cholesteric filter is a switchable small band cholesteric filter.

7. System according to one of claims 1 to 6, further comprising optical notch filters in the light path.

8. System according to one of claims 1 to 7, further comprising a third display panel (45) subdivided into individually addressable light transmitting or reflecting pixels arranged so that the light from the first polarizer (24, 44) may pass through a pre-determined light transmitting or reflecting pixel and wherein each light transmitting or reflecting pixel is adapted to change the polarization state of the light passing through as a response to a signal addressing the light transmitting or reflecting pixel.

9. System according to any previous claim, wherein the light transmitting or reflecting pixels (15, 16) of the second display panel (14) comprise polarization changing means selected from the group comprising electrically controlled birefringence cells, optically controlled bend cells, vertically aligned nematic cells, twisted nematic cells, pi-cells, ferroelectric cells, antiferroelectric cells and/or non-liquid crystal cell and/or the light transmitting or reflecting pixels of the third display panel (45) comprise polarization changing means selected from the group comprising electrically controlled birefringence cells, optically controlled bend cells, vertically aligned nematic cells, twisted nematic cells, pi-cells, ferroelectric cells, antiferroelectric cells and/or non-liquid crystal cells.

10. Method for providing stereoscopic images comprising the steps of

   a. Providing a left eye stereo video signal S_l assigned to an individual light emitting, transmitting or reflecting pixel, the signal comprising information on the x-coordinate of the pixel, the y-coordinate of the pixel, the wavelength of the light emitted by the pixel and the intensity of the light emitted by the pixel;

b. Providing a right eye stereo video signal S_r assigned to an individual light emitting, transmitting or reflecting pixel, the signal comprising information on the x-coordinate of the pixel, the y-coordinate of the pixel, the wavelength of the light emitted, transmitted or reflected by the pixel and the intensity of the light emitted, transmitted or reflected by the pixel;

c. Processing the signals S_l and S_r to yield an intensity information S comprising information on the intensity and the wavelength of light emitted, transmitted or reflected from a pixel with x and y coordinates;

d. Processing the signals S_l and S_r to yield a polarization information P comprising information on the polarization and the wavelength of light emitted, transmitted or reflected from a pixel with x and y coordinates;

e. Providing the image according to intensity information S on a first projection or display panel;

f. Filtering a parameter of the light in a colour-selective manner;

g. Changing the degree of polarization of the light according to polarization information P on a second projection or display panel;

h. Modulating the amplitude of the light leaving the second display panel in a polarization-selective manner.

11. Method according to claim 10, wherein the changing of the degree of polarization of the light in step g) is undertaken using means selected from the group comprising electrically controlled birefringence cells, optically controlled bend cells, vertically aligned nematic cells, twisted nematic cells, pi-cells, ferroelectric cells, antiferroelectric cells and/or non-liquid crystal cells.

12. Method according to claim 10 or 11, wherein the filtering of a parameter of the light in a colour-selective manner according to step f) is undertaken using a colour-selective retarder.

13. A controller for controlling a stereoscopic optical system to carry out a method according to claims 10 to 12, the controller comprising:

means for controlling a left eye stereo video signal S_l assigned to an individual light emitting, transmitting or reflecting pixel, the signal comprising information on the x-coordinate of the pixel, the y-coordinate of the pixel, the wavelength of the light emitted, transmitted or reflected by the pixel and the intensity of the light emitted, transmitted or reflected by the pixel;

means for controlling a right eye stereo video signal S_r assigned to an individual light emitting, transmitting or reflecting pixel, the signal comprising information on the x-coordinate of the pixel, the y-coordinate of the pixel, the wavelength of the light emitted, transmitted or reflected by the pixel and the intensity of the light emitted, transmitted or reflected by the pixel;

means for processing the signals S_l and S_r to yield an intensity information S comprising information on the intensity and the wavelength of light emitted, transmitted or reflected from a pixel with x and y coordinates;

means for processing the signals S_l and S_r to yield a polarization information P comprising information on the polarization and the wavelength of light emitted, transmitted or reflected from a pixel with x and y coordinates; and

means for controlling the projection or display of the image according to intensity information S on a first projection or display panel and for filtering a parameter of the light in a colour-selective manner, for varying the degree of polarization of the light according to polarization information P on a second projection or display panel and for modulating the amplitude of the light leaving the second projection or display panel in a polarization-selective manner.

14. Computer-readable medium, comprising instructions enabling a computer to carry out the method according to one of claims 10 to 12.

15. A computer program product for enabling a computer to carry out the method according to one of claims 10 to 12.

FIG. 1

FIG. 2

FIG. 3

FIG. 4

S_l(x,y,λ,I)          S_r(x,y,λ,I)

51

S(x,y,λ,I)          P(x,y,λ,I)

# FIG. 5

61          62

63

# FIG. 6

$2\beta\_l = 180°$
$2\beta\_r = 0°$

FIG. 7.1

$2\beta\_l = 0°$
$2\beta\_r = 180°$

FIG. 7.2

$2\beta\_l = 45°$
$2\beta\_r = 135°$

FIG. 7.3

81

86

82

83

87

84

85

# FIG. 8

Europäisches
Patentamt

European
Patent Office

Office européen
des brevets

# EUROPEAN SEARCH REPORT

**Application Number**

EP 08 16 0665

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2004/006005 A (KONINKL PHILIPS ELECTRONICS NV [NL]; CIRKEL PETER A [NL]; KARMAN GERAR) 15 January 2004 (2004-01-15)<br>* abstract *<br>* page 6, line 9 - line 25 *<br>* page 9, line 22 - page 10, line 6; figure 2 *<br>----- | 1-15 | INV.<br>G02B27/26<br>H04N13/00 |
| Y | US 5 835 166 A (HALL DENNIS R [US] ET AL) 10 November 1998 (1998-11-10)<br>* column 6, line 7 - column 7, line 53; figures 1,2 *<br>----- | 1-15 | |
| A | US 6 188 460 B1 (FARIS SADEG M [US]) 13 February 2001 (2001-02-13)<br>* abstract; figure 1 *<br>----- | 1,10 | |
| A | US 6 580 482 B1 (HIJI NAOKI [JP] ET AL) 17 June 2003 (2003-06-17)<br>* abstract; figure 1 *<br>----- | 1,10 | |
| | | | TECHNICAL FIELDS SEARCHED (IPC)<br><br>G02B<br>H04N |

The present search report has been drawn up for all claims

| Place of search | Date of completion of the search | Examiner |
|---|---|---|
| The Hague | 2 October 2008 | Lehtiniemi, Henry |

**ANNEX TO THE EUROPEAN SEARCH REPORT
ON EUROPEAN PATENT APPLICATION NO.**

EP 08 16 0665

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2008

| Patent document cited in search report | | Publication date | Patent family member(s) | | Publication date |
|---|---|---|---|---|---|
| WO 2004006005 | A | 15-01-2004 | AU | 2003232412 A1 | 23-01-2004 |
| | | | CN | 1666142 A | 07-09-2005 |
| | | | JP | 2005532584 T | 27-10-2005 |
| | | | US | 2005254113 A1 | 17-11-2005 |
| US 5835166 | A | 10-11-1998 | NONE | | |
| US 6188460 | B1 | 13-02-2001 | NONE | | |
| US 6580482 | B1 | 17-06-2003 | JP | 3599089 B2 | 08-12-2004 |
| | | | JP | 2000147547 A | 26-05-2000 |
| | | | KR | 20000035045 A | 26-06-2000 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006038819 A1
- WO 9825414 A1

- EP 1830585 A2

**Non-patent literature cited in the description**

- **Steve Furber.** ARM, System-on-chip architecture. Addison-Wiley, 2000